# EUROPEAN PATENT APPLICATION

(11) **EP 4 661 555 A1**
(43) Date of publication of application: **10.12.2025**
(21) Application number: 23918937.6
(22) Date of filing: 30.01.2023
(51) Int. Cl.: H04W 72/231

(54) **GNSS VALIDITY PERIOD TRANSMISSION METHOD AND APPARATUS, DEVICE, AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Dehns Germany Partnerschaft mbB
(86) International application number: PCT/CN2023/073779
(87) International publication number: WO 2024/159347

(57) **Abstract**

The present application relates to the field of communications, and discloses a GNSS validity period transmission method and apparatus, a device, and a storage medium. The method comprises: sending a first media access control (MAC) control element (CE), the first MAC CE carrying a GNSS validity period. An accurate GNSS validity period can be shared between a terminal device and a network device in a timely manner.

## Description

### FIELD

The present application relates to the field of communications, and more particularly to a method and an apparatus for transmitting a GNSS validity duration, a device, and a storage medium.

### BACKGROUND

The global navigation satellite system (GNSS) position fix obtained by a terminal device has a validity duration. After the validity duration expires, the GNSS position fix is outdated, and the terminal device needs to obtain the GNSS position fix again. Moreover, some internet of things (IoT) terminal devices do not support simultaneous GNSS receiving and long term evolution (LTE) transmitting and receiving, which leads to a problem in sharing GNSS validity duration between the terminal device and the network device.

In order to enable the terminal device and the network device to share accurate GNSS validity duration, a design of the terminal device to report the GNSS validity duration is considered in the related art, but there is no clear solution on how to report the GNSS validity duration.

### SUMMARY

Embodiments of the present application provide a method and an apparatus for transmitting a GNSS validity duration, a device, and a storage medium. The technical solution is as follows.

According to an aspect of the present application, there is provided a method for transmitting a global navigation satellite system (GNSS) validity duration, and the method is performed by a terminal device and includes:
sending a first media access control (MAC) control element (CE), in which the first MAC CE carries the GNSS validity duration.

According to an aspect of the present application, there is provided a method for transmitting a GNSS validity duration, and the method is performed by a network device and includes:
receiving a first MAC CE, in which the first MAC CE carries the GNSS validity duration.

According to an aspect of the present application, there is provided an apparatus for transmitting a GNSS validity duration, and the apparatus includes:
a first sending module, configured to send a first MAC CE, in which the first MAC CE carries the GNSS validity duration.

According to an aspect of the present application, there is provided an apparatus for transmitting a GNSS validity duration, and the apparatus includes:
a second receiving module, configured to receive a first MAC CE, in which the first MAC CE carries the GNSS validity duration.

According to an aspect of the present application, there is provided a terminal device, and the terminal device includes a processor; a transceiver connected to the processor; and a memory storing executable instructions of the processor, in which the processor is configured to load and execute the executable instructions to implement the method for transmitting the GNSS validity duration according to the aspects described above.

According to an aspect of the present application, there is provided a network device, and the network device includes a processor; a transceiver connected to the processor; and a memory storing executable instructions of the processor, in which the processor is configured to load and execute the executable instructions to implement the method for transmitting the GNSS validity duration according to the aspects described above.

According to an aspect of the present application, there is provided a computer-readable storage medium storing executable instructions, in which a processor loads and executes the executable instructions to implement the method for transmitting the GNSS validity duration according to the aspects described above.

According to an aspect of the present application, there is provided a computer program product including computer instructions stored on a computer-readable storage medium, in which a processor of a computer device reads the computer instructions from the computer-readable storage medium and executes the computer instructions, to cause the computer device to perform the method for transmitting the GNSS validity duration according to the aspects described above.

According to an aspect of the present application, there is provided a chip including a programmable logic circuit and/or program instructions, in which the chip runs to implement the method for transmitting the GNSS validity duration according to the aspects described above.

According to an aspect of the present application, there is provided a computer program including computer instructions, in which a processor of a computer device executes the computer instructions, to cause the computer device to perform the method for transmitting the GNSS validity duration according to the aspects described above.

The technical solution provided by embodiments of the present application at least has the following beneficial effect.

The GNSS validity duration is sent by being carried in the MAC CE, such that the terminal device and the network device may share accurate the GNSS validity duration in a timely manner, improving the accuracy and effectiveness of the positioning method based on GNSS technology.

### BRIEF DESCRIPTION OF THE DRAWINGS

To describe technical solutions in embodiments of the present application more clearly, the following will briefly introduce the accompanying drawings required for the description of the embodiments. Obviously, the accompanying drawings described below show some embodiments of the present application, and those skilled in the art can obtain other drawings based on these drawings without paying creative efforts.
FIG. 1 illustrates a schematic diagram of an NTN communication system provided by some illustrative embodiments of the present application;
FIG. 2 illustrates a schematic diagram of an NTN communication system provided by some illustrative embodiments of the present application;
FIG. 3 illustrates a schematic diagram of an NTN communication system provided by some illustrative embodiments of the present application;
FIG. 4 illustrates a schematic diagram of an NTN communication system provided by some illustrative embodiments of the present application;
FIG. 5 illustrates a schematic diagram of an NTN communication system provided by some illustrative embodiments of the present application;
FIG. 6 illustrates a flowchart of a method for transmitting a GNSS validity duration provided by some illustrative embodiments of the present application;
FIG. 7 illustrates a flowchart of a method for transmitting a GNSS validity duration provided by some illustrative embodiments of the present application;
FIG. 8 illustrates a flowchart of a method for transmitting a GNSS validity duration provided by some illustrative embodiments of the present application;
FIG. 9 illustrates a flowchart of a method for transmitting a GNSS validity duration provided by some illustrative embodiments of the present application;
FIG. 10 illustrates a flowchart of a method for transmitting a GNSS validity duration provided by some illustrative embodiments of the present application;
FIG. 11 illustrates a block diagram of an apparatus for transmitting a GNSS validity duration provided by some illustrative embodiments of the present application;
FIG. 12 illustrates a block diagram of an apparatus for transmitting a GNSS validity duration provided by some illustrative embodiments of the present application; and
FIG. 13 illustrates a block diagram of a communication device provided by some illustrative embodiments of the present application.

### DETAILED DESCRIPTION OF THE DISCLOSURE

In order to make the purpose, technical solutions and advantages of the present application more clearer, embodiments of the present application will be further described below with reference to the accompanying drawings. Illustrative embodiments will be illustrated in detail herein, and the examples thereof are shown in the accompanying drawings. When the following description refers to the accompanying drawings, unless otherwise specified, the same or similar elements are denoted by the same numerals in the different accompanying drawings. Implementations described in the illustrative embodiments do not represent all implementations consistent with the present application. On the contrary, they are merely examples of a device and a method consistent with some aspects of the present application, as elaborated in the appended claims.

The terms used in the present disclosure are only for purpose of description of particular embodiments, and are not intended to limit the present disclosure. The singular form "a", "the" and "this" used in the present disclosure and the appended claims is also intended to include the plural form, unless other meanings are explicitly expressed in the context. It should be understood that, the term "and/or" used herein refers to include any or all of the possible combinations of one or a plurality of listed related items.

It should be understood that, although the terms "first", "second", "third" may be employed by the present disclosure to describe various information, these information should not limited by these terms. These terms are only used to distinguish the information of the same type from each other. For example, first information may be referred to as second information without departing from the scope of the present disclosure, and similarly, the second information may also be referred to as the first information. Depending on the context, the word "if" used herein may be interpreted as "when...", "upon..." or "in response to determination".

First, the related technology involved in embodiments of the present application is described.

### (1) Communication scenarios

The communication system scenario includes terrestrial network (TN) and non-terrestrial network (NTN). NTN generally uses satellite communications to provide communication services to terrestrial users. The NTN system currently includes the new radio (NR)-NTN and internet of things (IoT)-NTN systems. The present application is primarily concerned with NTN, which, in simple terms, provides wireless resources to a target device via satellites or unmanned aerial system (UAS), rather than via terrestrial base stations. The present application is illustrated schematically with an example of providing wireless resources to the terminal device via the satellite.

Communication satellites are divided into low-earth orbit (LEO) satellites, medium-earth orbit (MEO) satellites, geostationary earth orbit (GEO) satellites, high elliptical orbit (HEO) satellites, and so on, according to the different orbital altitudes. The main studies at this stage are LEO and GEO.

### 1. LEO

The altitude range of LEO satellites is 500km to 1500km, and the corresponding orbital period is about 1.5 hours to 2 hours. The signal propagation delay for single-hop communication between users is typically less than 20 ms. Maximum satellite visibility time is 20 minutes. The signal propagation distance is short, the link loss is low, and the transmit power requirement for the user terminal equipment is not high.

### 2. GEO

Satellite in geosynchronous orbit with an orbital altitude of 35,786 km and a rotation period of 24 hours around the Earth. The signal propagation delay for single-hop communication between users is typically 250 ms.

In order to ensure satellite coverage and enhance the system capacity of the entire satellite communication system, satellites use a plurality of beams to cover the ground, and a satellite can form dozens or even hundreds of beams to cover the ground; a satellite beam can cover a ground area with a diameter of dozens to hundreds of kilometers.

The satellite altitude, orbit, and satellite coverage of a typical NTN network are given in Table 1:

**Table 1 Satellite altitude, orbit, and satellite coverage of the NTN network**

| Platforms | Altitude range | Orbit | Typical beam size |
|---|---|---|---|
| LEO satellites | 300 - 1500 km | Circular around the earth | 100 - 1000 km |
| MEO satellites | 7000 - 25000 km | | 100 - 1000 km |
| GEO satellites | 35786 km | Notional station keeping position fixed in terms of elevation/azimuth with respect to a given earth point | 200 - 3500 km |
| Unmanned aerial platforms (including high-altitude platforms) | 8 - 50 km (20 km for high altitude platforms) | | 5 - 200 km |
| HEO satellites | 400 - 50000 km | Elliptical around the earth | 200 - 3500 km |

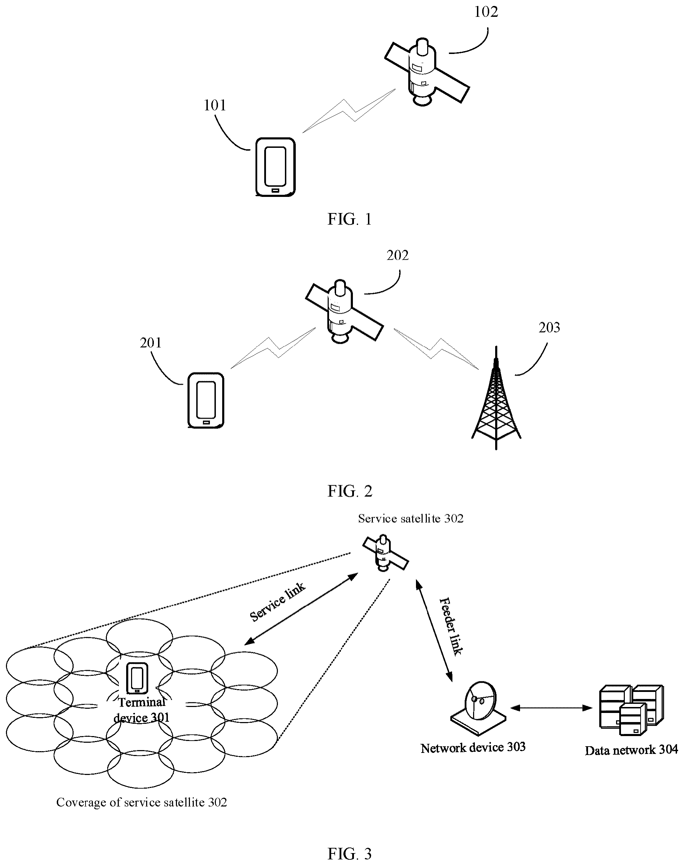

By way of example, FIG. 1 is a schematic diagram of an architecture of a communication system provided by an embodiment of the present application. As illustrated in FIG. 1, the communication system includes a terminal device 101 and a satellite 102, and wireless communication may be performed between the terminal device 101 and the satellite 102. The network formed between the terminal device 101 and the satellite 102 may also be referred to as NTN. In the architecture of the communication system illustrated in FIG. 1, the satellite 102 may function as a base station, and there may be direct communication between the terminal device 101 and the satellite 102. Under this communication system architecture, the satellite 102 may be referred to as a network device. In some embodiments, the communication system may include a plurality of network devices (i.e., satellites 102) and may include other numbers of terminal devices within the coverage area of each network device, which is not limited by the present application.

By way of example, FIG. 2 is a schematic diagram of an architecture of another communication system provided by an embodiment of the present application. As illustrated in FIG. 2, the communication system includes a terminal device 201, a satellite 202 and a base station 203, wireless communication may be performed between the terminal device 201 and the satellite 202, and communication may be performed between the satellite 202 and the base station 203. The network formed between the terminal device 201, the satellite 202 and the base station 203 may also be referred to as NTN. In the architecture of the communication system illustrated in FIG. 2, the satellite 202 may not function as a base station, and communication between the terminal device 201 and the base station 203 needs to be relayed through the satellite 202. Under this communication system architecture, the base station 203 may be referred to as a network device. In some in embodiments, the communication system may include a plurality of network devices (i.e., the base stations 203) and may include other numbers of terminal devices within the coverage area of each network device, which is not limited by the present application.

By way of example, FIG. 3 is a schematic diagram of an NTN communication scenario provided by an embodiment of the present application. The transmission link between the terminal device 301 and the service satellite 302 is a service link, and the transmission link between the service satellite 302 and the gateway 303 is a feeder link, and both the service link and the feeder link may change over time. A data network 304 may be a private network, such as a local area network (LAN); an external network not under the control of the operator, such as the Internet; or a dedicated network jointly deployed by the operators, such as the IP Multimedia Core Network Subsystem (IMS). The gateway 303 may access the data network 304.

### (2) Global Navigation Satellite System (GNSS)

GNSS refers broadly to all systems that enable positioning via satellite signals, including global systems, regional systems and augmented systems. Simply, GNSS provides users with all-weather, three-dimensional coordinate, speed, and time information anywhere on the Earth's surface or in near-Earth space, and GNSS may utilize observations, such as pseudo-range, ephemeris, and satellite transmission time from a group of satellites, as well as the user clock bias, to locate the user terminal equipment.

When the positioning of the terminal device is realized through GNSS, the GNSS position fix obtained by the terminal device has a validity duration, and after the validity duration expires, the GNSS position fix is outdated, and the terminal needs to obtain the GNSS position fix again.

Moreover, some Internet of Things (IoT) terminal devices do not support simultaneous GNSS receiving and Long Term Evolution (LTE) transmitting and receiving, which leads to a problem in sharing and synchronizing GNSS validity duration between the terminal device and the network device, which in turn affects the accuracy and effectiveness of GNSS positioning.

The IoT terminal devices include: at least one of a Bandwidth Reduction and Low Complexity UE (BL UE), a UE in Coverage Enhancement Mode (UE in CE Mode), a Narrow Band Internet of Things UE (NB-IoT UE).

A design of the terminal device to report the GNSS validity duration is considered in the related art, but there is no clear solution on how to report the GNSS validity duration.

The present application proposes a method for sending a GNSS validity duration that supports the reporting of a GNSS validity duration by the terminal device, enabling the sharing of an accurate GNSS validity duration between the network device and the terminal device.

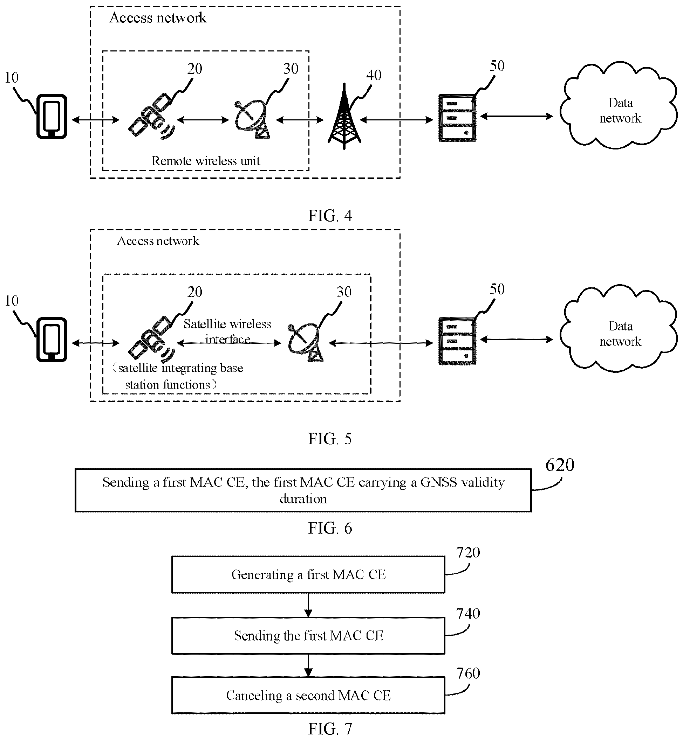

FIG. 4 illustrates a schematic diagram of an NTN communication system provided by an illustrative embodiment of the present application. The communication satellites in the NTN system are transparent payload satellites. As illustrated in FIG. 4, the NTN system includes: a terminal device 10, a satellite 20, an NTN gateway 30, an access network device 40, and a core network device 50.

Communication between the terminal device 10 and the access network device 40 may be performed through an air interface (e.g., a Uu interface). In the architecture illustrated in FIG. 4, the access network device 40 may be deployed on the ground, and uplink and downlink communications between the terminal device 10 and the access network device 40 may be relayed for transmission via the satellite 20 and the NTN gateway 30, which is typically located on the ground. As an example of uplink transmission, the terminal device 10 sends the uplink signal to the satellite 20, the satellite 20 forwards the uplink signal to the NTN gateway 30, the NTN gateway 30 in turn forwards the uplink signal to the access network device 40, and subsequently the access network device 40 sends the uplink signal to the core network device 50. As an example of downlink transmission, the downlink signal from the core network device is sent to the access network device 40, the access network device 40 forwards the downlink signal to the NTN gateway 30, the NTN gateway 30 forwards the downlink signal to the satellite 20, and then the satellite 20 forwards the downlink signal to the terminal device 10.

In the NTN system the satellite 20 has the function of frequency conversion and signal amplification, the satellite 20 does not demodulate the signal of the access network device 40, and the satellite 20 is similar to a repeater.

FIG. 5 illustrates a schematic diagram of another NTN communication system provided by an illustrative embodiment of the present application, and the communication satellites in the NTN system are regenerative payload (RP) satellites. As illustrated in FIG. 5, the NTN system includes: a terminal device 10, a satellite 20, an NTN gateway 30, and a core network device 50.

In the architecture illustrated in FIG. 5, the function of the access network device 40 is integrated on the satellite 20, i.e., the satellite 20 has the function of the access network device 40. Communication between the terminal device 10 and the satellite 20 may be performed through an air interface (e.g., a Uu interface). Communication between the satellite 20 and the NTN gateway 30 (typically located on the ground) may be performed through a satellite radio interface (SRI). In the NTN system, the satellite receives the signal, demodulates and decodes it, recodes and modulates it, and sends the regenerated signal through the satellite frequency band.

In the architecture illustrated in FIG. 5, as an example of uplink transmission, the terminal device 10 sends the uplink signal to the satellite 20, the satellite 20 forwards the uplink signal to the NTN gateway 30, and the NTN gateway 30 in turn forwards the uplink signal to the core network device 50. As an example of downlink transmission, the downlink signal from the core network device 50 is sent to the NTN gateway 30, the NTN gateway 30 forwards the downlink signal to the satellite 20, and then the satellite 20 forwards the downlink signal to the terminal device 10.

In the network architecture illustrated in FIGS. 4 and 5, the access network device 40 is a device for providing wireless communication services to the terminal device 10. A connection may be established between the access network device 40 and the terminal device 10 such that communication, including signaling and data interaction, may be performed through the connection. The number of access network devices 40 may be more than one, and communication between two access network devices 40 may also be performed by wired or wireless means. The terminal device 10 may switch between different access network devices 40, i.e., establish connections with different access network devices 40.

The access network device 40 includes, but is not limited to, Evolved Node B (eNB), Radio Network Controller (RNC), Node B (NB), Base Station Controller (BSC), Base Transceiver Station (BTS), Home Base Station (e.g., Home Evolved Node B, or Home Node B, HNB), Baseband Unit (BBU), Access Point (AP) in a Wireless Fidelity (Wi-Fi) system, Wireless Relay Node, Wireless Return Node, Network device, Transmission Point (TP) or Transmission and Reception Point (TRP), etc., and may also be the Next Generation Node B (gNB) or Transmission Point (TRP or TP) in the 5G system, or one or a group (including a plurality of antenna panels) of antenna panels of a base station in the 5G system, or a network node constituting the gNB or the Transmission Point, such as a Base Band Unit (BBU) or a Distributed Unit (DU), etc., or a base station, etc. in a 6G communication system, or a Radio Access Network (RAN) device, a network slice, etc. The base station is a device deployed in an access network to provide wireless communication functions for the terminal device. The base station may include various forms of macro base stations, micro base stations, repeater, access points, etc. In systems that utilize different radio access technologies, the name of the device with base station function may vary, for example, in 5G NR systems, it is referred to as gNodeB or gNB. As communication technology evolves, the name 'base station' may change. For convenience of description, in embodiments of the present disclosure, devices providing wireless communication functions for terminal device 10 are collectively referred to as the base station or the access network device.

Additionally, the terminal device 10 involved in embodiments of the present disclosure may include handheld device, on-board device, wearable device, computing device with wireless communication function, or other processing devices connected to wireless modems, and various types of user equipment (UE), mobile stations (MS), terminal devices, access terminal, user unit, user station, mobile, remote station, remote terminal, mobile device, user terminal, terminal, wireless communication device, user agent, user device. The terminal device 10 includes, but is not limited to: handheld device, wearable device, on-board device, and IoT device, such as: mobile phone, tablet, e-book reader, laptop, desktop computer, television, game console, mobile internet device (MID), augmented reality (AR) terminal, virtual reality (VR) terminal, and mixed reality (MR) terminal, wearable device, joystick, electronic label, controller, wireless terminal in industrial control, wireless terminal in self driving, wireless terminal in remote medical, wireless terminal in smart grid, wireless terminal in transportation safety, wireless terminal in smart city, wireless terminal in smart home, wireless terminal in remote medical surgery, cellular phone, cordless phone, session initiation protocol (SIP) phone, wireless local loop (WLL) station, personal digital assistant (PDA), set top box (STB), customer premise equipment (CPE), etc. For convenience of description, in embodiments of the present disclosure, devices mentioned above are collectively referred to as terminal devices. In embodiments of the present disclosure, "UE" is used in some places to represent "terminal device". In embodiments of the present disclosure, "network device" may be an access network device (e.g., a base station) or a satellite.

In addition, in a case of a 5G NTN system, the NTN system may include a plurality of satellites 20. The satellite 20 may cover a certain range of ground area to provide wireless communication services for the terminal device 10 on the ground area. In addition, the satellite 20 may make an orbital movement around the earth, and by deploying a plurality of satellites 20, communication coverage of different areas on the earth's surface may be realized.

The technical solutions provided in embodiments of the present application may be applied to various communication systems, such as: global system of mobile communications (GSM) system, code division multiple access (CDMA) system, wideband code division multiple access (WCDMA) system, general packet radio service (GPRS), long term evolution (LTE) system, LTE frequency division duplex (FDD) system, LTE time division duplex (TDD) system, advanced long term evolution (LTE-A) system, universal mobile telecommunication system (UMTS), worldwide interoperability for microwave access (WiMAX) communication system, 5th generation (5G) mobile communication system, new radio (NR) system, evolved systems of the NR system, LTE-based access to unlicensed spectrum (LTE-U) system, NR-based access to unlicensed spectrum (NR-U) system, terrestrial network (TN) system, non-terrestrial network (NTN) system, wireless local area network (WLAN), wireless fidelity (Wi-Fi), cellular IoT system, cellular passive IoT system, as well as subsequent evolution system of 5G NR system, and may also be applied to 6G and subsequent evolution systems. In some embodiments of the present application, 'NR' may also be referred to as a 5G NR system or a 5G system. The 5G mobile communication system may include non-standalone (NSA) and/or standalone (SA) networks.

The technical solutions provided in embodiments of the present application may also be applied to machine type communication (MTC), long-term evolution-machine (LTE-M), device-to-device (D2D) network, machine-to-machine (M2M) network, Internet of Things (IoT) network, or other networks. The IoT network may include, for example, a vehicle network. The communication manner used in the vehicle network system is collectively referred to as vehicle-to-X (V2X), where X may represent any entity. For example, V2X may include: vehicle-to-vehicle (V2V) communication, vehicle-to-infrastructure (V2I) communication, vehicle-to-pedestrian (V2P) communication, or vehicle-to-network (V2N) communication, among others.

The NTN communication system provided in the embodiment may be applied to, but is not limited to, at least one of the following positioning methods: downlink time difference of arrival (DL-TDOA) positioning method, uplink time difference of arrival (UL-TDOA) positioning method, and multi-round trip time (Multi-RTT) positioning method.

Furthermore, in embodiments of the present disclosure, the terms 'network' and 'system' are often used interchangeably, but those skilled in the art will understand their meanings.

FIG. 6 illustrates a flowchart of a method for transmitting a GNSS validity duration provided by some illustrative embodiments of the present application. For example, the method is performed by a terminal device, and the method includes at least some of the following steps.

In step 620: a first media access control (MAC) control element (CE) is sent, in which the first MAC CE carries the GNSS validity duration.

The GNSS validity duration refers to the validity time of a GNSS position fix, which may be understood as information related to the validity time of the GNSS position fix.

The first MAC CE is sent from the terminal device to the network device, and the network device includes an access network device and/or a satellite.

The MAC layer is used to multiplex (or map) a plurality of logical channels onto the same transport channel and transfer the mapped transport channel's transport blocks (TB) to the physical layer (PHY).

The MAC layer includes multiplexing/demultiplexing entities and logical channel prioritization (LCP) entities. The multiplexing and demultiplexing entities may be responsible for compositing and decompositing MAC protocol data units (PDUs) and performing multiplexing/demultiplexing of data from several logical channels to/from a transport channel. In simple terms, multiplexing refers to the process of mapping a plurality of logical channels to a single transport channel, while demultiplexing refers to the process of mapping a single transport channel to a plurality of logical channels. MAC PDU may also be understood as MAC package data unit or MAC packet data unit.

The logical channel prioritization refers to the logical channel priority allocation process, i.e., allocating resources to logical channels according to the logical channel priority. For example, resources is allocated to logical channels in descending order of logical channel priority. When allocating wireless resources for new transmissions, the logical channel prioritization entity may instruct the multiplexing/demultiplexing entity to generate a MAC PDU from a MAC service data unit (SDU). The MAC PDU is a transport block for the physical layer, and a transport block includes a MAC PDU.

The MAC PDU includes a MAC CE, as well as at least one of a MAC header, a MAC SDU, and a padding section. The MAC header includes one or more MAC sub headers. Each MAC sub header corresponds to a MAC PDU, a MAC CE, or a padding section. In other words, each MAC PDU, each MAC CE, and each padding section has a corresponding MAC sub header. The length of the MAC header, MAC sub header, and MAC SDU is variable.

In general, in the method provided by the present embodiment, the GNSS validity duration is sent by being carried in the MAC CE, such that the terminal device and the network device may share accurate the GNSS validity duration in a timely manner, improving the accuracy and effectiveness of the positioning method based on GNSS technology.

FIG. 7 illustrates a flowchart of a method for transmitting a GNSS validity duration provided by some illustrative embodiments of the present application. For example, the method is performed by a terminal device, and the method includes at least some of the following steps.

In step 720, a first MAC CE is generated.

In a case where at least one MAC CE carrying the GNSS validity duration is triggered, the terminal device generates at least one MAC CE carrying the GNSS validity duration through the multiplexing and assembly process.

The MAC CE carrying the GNSS validity duration may also be understood as a MAC CE used to send the GNSS validity duration, such as one named 'GNSS validity duration MAC CE.' The present application does not limit the name.

The terminal device generates a MAC PDU based on the logical channel prioritization result. This MAC PDU only includes a MAC CE carrying the GNSS validity duration. The MAC CE included in the MAC PDU is the first MAC CE.

The first MAC CE is any one of the at least one MAC CE carrying the GNSS validity duration, or one selected according to a specific rule (such as priority rule).

The GNSS validity duration includes at least one of: a remaining GNSS validity duration, a total GNSS validity duration, and a GNSS expiration duration. A start moment of the remaining GNSS validity duration is a moment of sending the first MAC CE. A start moment of the total GNSS validity duration is a moment of the terminal device obtaining the GNSS position fix. The GNSS expiration duration refers to the time for which the GNSS position fix is invalid, a time start moment of the GNSS expiration duration is the moment of terminal device obtaining the GNSS position fix, and an end moment of GNSS expiration duration is the moment of sending first MAC CE.

In step 740, the first MAC CE is sent.

In a case where at least one MAC CE carrying the GNSS validity duration is triggered, a MAC PDU is sent, the MAC PDU carrying the first MAC CE.

In some embodiments, when the terminal device receives the GNSS position fix, at least one MAC CE carrying the GNSS validity duration is triggered.

In some embodiments, at least one MAC CE carrying the GNSS validity duration is triggered, which may be understood as the terminal device being in a state where it needs to send the MAC CE carrying the GNSS validity duration, or the terminal device being in a state where it is ready to send the MAC CE carrying the GNSS validity duration, or the terminal device being in a state where it is about to send the MAC CE carrying the GNSS validity duration.

The first MAC CE is sent from the terminal device to the network device, and the network device includes an access network device and/or a satellite.

In a case where a first uplink resource is present, the first MAC CE is sent on the first uplink resource. The first uplink resource is an idle, unoccupied, or unused uplink resource among the uplink resources already allocated to the terminal device, and a data volume corresponding to the first MAC CE is less than or equal to a data volume corresponding to the first uplink resource. It may also be understood that the first uplink resource is the uplink resource that may be used by the terminal device to send the first MAC CE. Or understood as, the first uplink resource is an uplink resource that is idle, unoccupied, or unused, and capable of accommodating the first MAC CE among the uplink resources already allocated to the terminal device. The terminal device directly uses the first uplink resource to send the MAC PDU carrying the first MAC CE.

In some embodiments, the data volume corresponding to the first MAC CE is less than or equal to the data volume corresponding to the first uplink resource. This may be understood to mean that the first uplink resource may accommodate the first MAC CE, or the first uplink resource may accommodate the first MAC CE and its corresponding MAC sub header. This may also be understood to mean that the data volume corresponding to the first MAC CE is less than or equal to the data volume or the maximum data volume that the first uplink resource can carry.

In some embodiments, the terminal device determines whether the first uplink resource is present based on the logical channel prioritization result. In a case where the logical channel prioritization result indicates that the first uplink resource is present, the terminal device sends the first MAC CE on the first uplink resource.

In step 760: a second MAC CE is canceled.

The second MAC CE is a MAC CE other than the first MAC CE among the at least one MAC CE carrying the GNSS validity duration.

In some embodiments, when the first MAC CE is carried in the MAC PDU for transmission, the terminal device cancels all triggered second MAC CEs; or when the first MAC CE is carried in the MAC PDU and is ready for transmission, the terminal device cancels all triggered second MAC CEs; or when the first MAC CE is carried in the MAC PDU and is about to be transmitted, the terminal device cancels all triggered second MAC CEs; or when the first MAC CE is carried in the MAC PDU and is being transmitted, the terminal device cancels all triggered second MAC CEs.

In some embodiments, when the first MAC CE is carried in the MAC PDU for transmission, the terminal device cancels all triggered MAC CEs (including the first MAC CE and the second MAC CE); or when the first MAC CE is carried in the MAC PDU and is ready for transmission, the terminal device cancels all triggered MAC CEs; or when the first MAC CE is carried in the MAC PDU and is about to be transmitted, the terminal device cancels all triggered MAC CEs; or when the first MAC CE is carried in the MAC PDU and is being transmitted, the terminal device cancels all triggered MAC CEs.

In some embodiments, the triggering of the MAC CE is canceled, which may be understood as the terminal device being in a state where it does not need to send the MAC CE carrying the GNSS validity duration, or the terminal device being in a state where it is not ready to send the MAC CE carrying the GNSS validity duration, or the terminal device being in a state where it is not about to send the MAC CE carrying the GNSS validity duration.

In some embodiments, the triggering of the MAC CE may be provided with a flag. Canceling the triggering may be done by removing the flag, meaning that the MAC CE will no longer be sent in the future. Otherwise, if the flag is not removed, the MAC CE will be sent again in the future.

In general, in the method provided by the present embodiment, in a case where the first uplink resource is currently present for sending the first MAC CE, the GNSS validity duration is carried in the first MAC CE, and is sent directly using the first uplink resource, improving the use efficiency of the uplink resource, thus the terminal device and the network device may share accurate the GNSS validity duration in a timely manner.

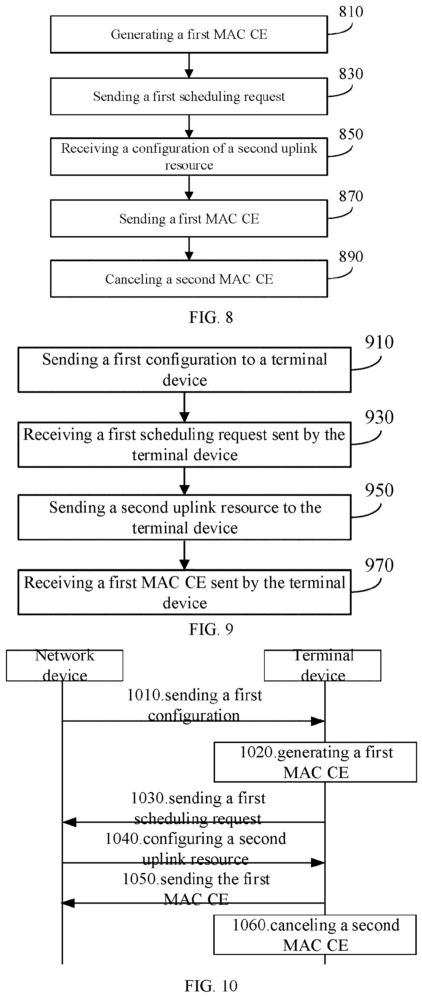

FIG. 8 illustrates a flowchart of a method for transmitting a GNSS validity duration provided by some illustrative embodiments of the present application. For example, the method is performed by a terminal device, and the method includes at least some of the following steps.

In step 810, a first MAC CE is generated.

In a case where at least one MAC CE carrying the GNSS validity duration is triggered, the terminal device generates at least one MAC CE carrying the GNSS validity duration through the multiplexing and assembly process. The multiplexing involves multiplexing a plurality of logical channels and MAC CEs onto a single MAC PDU, and the assembly involves loading MAC CEs and logical channel data according to the priority.

The terminal device generates a MAC PDU based on the logical channel prioritization result. This MAC PDU only includes a MAC CE carrying the GNSS validity duration. The MAC CE included in the MAC PDU is the first MAC CE.

The first MAC CE is any one of the at least one MAC CE carrying the GNSS validity duration, or one selected according to a specific rule (such as priority rule).

The GNSS validity duration includes at least one of: a remaining GNSS validity duration, a total GNSS validity duration, and a GNSS expiration duration. A start moment of the remaining GNSS validity duration is a moment of sending the first MAC CE. A start moment of the total GNSS validity duration is a moment of the terminal device obtaining the GNSS position fix. The GNSS expiration duration refers to the time for which the GNSS position fix is invalid, a time start moment of the GNSS expiration duration is the moment of terminal device obtaining the GNSS position fix, and an end moment of GNSS expiration duration is the moment of sending first MAC CE.

In step 830, a first scheduling request is sent.

The first scheduling request is sent by the terminal device to the network device. The first scheduling request is used to request the network device to configure the second uplink resource for the terminal device. The second uplink resource is the uplink resource configured by the network device upon request from the terminal device for sending the first MAC CE.

In a case where no first uplink resource is present, the terminal device sends a first scheduling request to the network device.

In some embodiments, the terminal device determines whether the first uplink resource is present based on the logical channel prioritization result. In a case where the logical channel prioritization result indicates that no first uplink resource is present, the terminal device sends the first scheduling request, and the first scheduling request is used to request the network device to configure the second uplink resource.

The first uplink resource is an idle, unoccupied, or unused uplink resource among the uplink resources already allocated to the terminal device, and a data volume corresponding to the first MAC CE is less than or equal to a data volume corresponding to the first uplink resource.

In some embodiments, the data volume corresponding to the first MAC CE is less than or equal to the data volume corresponding to the first uplink resource. This may be understood to mean that the first uplink resource may accommodate the first MAC CE, or the first uplink resource may accommodate the first MAC CE and its corresponding MAC sub header. This may also be understood to mean that the data volume corresponding to the first MAC CE is less than or equal to the data volume or the maximum data volume that the first uplink resource can carry.

The second uplink resource refers to an uplink resource configured by the network device upon request from the terminal device for sending the first MAC CE, and the data volume corresponding to the first MAC CE is less than or equal to the data volume corresponding to the second uplink resource.

In some embodiments, the data volume corresponding to the first MAC CE is less than or equal to the data volume corresponding to the second uplink resource. This may be understood to mean that the second uplink resource may accommodate the first MAC CE, or the second uplink resource may accommodate the first MAC CE and its corresponding MAC sub header. This may also be understood to mean that the data volume corresponding to the first MAC CE is less than or equal to the data volume or the maximum data volume that the second uplink resource can carry.

In some embodiments, before sending the first scheduling request, the terminal device also receives a first configuration sent by the network device, and the first configuration is used to allow the terminal device to send the first scheduling request.

In some embodiments, the first configuration is sent by the network device when establishing a connection with the terminal device, or sent periodically by the network device, or sent semi-periodically by the network device, or sent non-periodically by the network device. The period value is predefined by the communication protocol, determined by the network device, or determined by the terminal device.

In some embodiments, the terminal device sends the first scheduling request based on a second configuration. The second configuration is used to configure a common scheduling request resource, i.e., generic scheduling request sending resource.

In some embodiments, before sending the first scheduling request, the terminal device may also receive the second configuration sent by the network device.

In some embodiments, the second configuration is sent periodically, semi-periodically, or non-periodically by the network device. The period value is predefined by the communication protocol, determined by the network device, or determined by the terminal device.

In some embodiments, the terminal device sends the first scheduling request based on a third configuration. The third configuration is used to configure a dedicated scheduling request resource, and the dedicated scheduling request resource is an uplink resource dedicated to sending the first scheduling request.

In some embodiments, before sending the first scheduling request, the terminal device may also receive the third configuration sent by the network device.

In some embodiments, the third configuration is sent periodically, semi-periodically, or non-periodically by the network device. The period value is predefined by the communication protocol, determined by the network device, or determined by the terminal device.

In some embodiments, the terminal device receives a configuration sent by the network device, and the configuration includes at least one of:
a first configuration indicating that the terminal device is allowed to send the first scheduling request;
a second configuration used to configure a common scheduling request resource; or
a third configuration used to configure a dedicated scheduling request resource, the dedicated scheduling request resource being dedicated to transmission of the first scheduling request.

In some embodiments, if the dedicated scheduling request resource is already configured for the terminal device, the terminal device uses the dedicated scheduling request resource to send the first scheduling request. In other words, in a case where the terminal device already receives the third configuration sent by the network device, the terminal device sends the first scheduling request based on the third configuration.

Otherwise, the terminal device uses the common scheduling request resource to send the first scheduling request. That is, if no dedicated scheduling request resource is configured for the terminal device, the terminal device uses the common scheduling request resource to send the first scheduling request. It may also be understood as, in a case where the terminal device does not receive the third configuration sent by the network device, the terminal device sends the first scheduling request based on the second configuration.

In step 850, a configuration of a second uplink resource is received.

The terminal device receives a configuration of the second uplink resource from the network device.

In step 870, the first MAC CE is sent.

In a case where at least one MAC CE carrying the GNSS validity duration is triggered, a MAC PDU is sent, the MAC PDU carrying the first MAC CE.

The first MAC CE is sent from the terminal device to the network device, and the network device includes an access network device and/or a satellite.

In a case where no first uplink resource is present, the terminal device sends the first MAC CE on the second uplink resource. Alternatively, in a case where the configuration of the second uplink resource is received, the terminal device sends the first MAC CE on the second uplink resource.

In some embodiments, the terminal device determines whether the first uplink resource is present based on the logical channel prioritization result. In a case where the logical channel prioritization result indicates that no first uplink resource is present, the terminal device sends the first MAC CE on the second uplink resource.

In step 890: a second MAC CE is canceled.

The second MAC CE is a MAC CE other than the first MAC CE among the at least one MAC CE carrying the GNSS validity duration.

In some embodiments, when the first MAC CE is carried in the MAC PDU for transmission, the terminal device cancels all triggered second MAC CEs; or when the first MAC CE is carried in the MAC PDU and is ready for transmission, the terminal device cancels all triggered second MAC CEs; or when the first MAC CE is carried in the MAC PDU and is about to be transmitted, the terminal device cancels all triggered second MAC CEs; or when the first MAC CE is carried in the MAC PDU and is being transmitted, the terminal device cancels all triggered second MAC CEs.

In some embodiments, when the first MAC CE is carried in the MAC PDU for transmission, the terminal device cancels all triggered MAC CEs (including the first MAC CE and the second MAC CE); or when the first MAC CE is carried in the MAC PDU and is ready for transmission, the terminal device cancels all triggered MAC CEs; or when the first MAC CE is carried in the MAC PDU and is about to be transmitted, the terminal device cancels all triggered MAC CEs; or when the first MAC CE is carried in the MAC PDU and is being transmitted, the terminal device cancels all triggered MAC CEs.

In some embodiments, the triggering of the MAC CE is canceled, which may be understood as the terminal device being in a state where it does not need to send the MAC CE carrying the GNSS validity duration, or the terminal device being in a state where it is not ready to send the MAC CE carrying the GNSS validity duration, or the terminal device being in a state where it is not about to send the MAC CE carrying the GNSS validity duration.

In general, in the method provided by the present embodiment, in a case where no first uplink resource is currently present for sending the first MAC CE, the first scheduling request is sent to the network device, and the first MAC CE carrying the GNSS validity duration is sent using the second uplink resource, such that the terminal device and the network device may share accurate the GNSS validity duration in a timely manner, preventing the problem of accurate GNSS validity duration not being shared in a timely manner between the terminal device and the network device due to the resource shortage.

FIG. 9 illustrates a flowchart of a method for transmitting a GNSS validity duration provided by some illustrative embodiments of the present application. For example, the method is performed by a network device, and the method includes at least some of the following steps.

In step 910: a first configuration is sent to a terminal device.

The first configuration is configured to allow the terminal device to send the first scheduling request. The first scheduling request is used to request the network device to configure the second uplink resource for the terminal device. The second uplink resource is the uplink resource configured by the network device upon request from the terminal device for sending the first MAC CE.

In some embodiments, the first configuration is sent by the network device when establishing a connection with the terminal device, or sent periodically by the network device, or sent semi-periodically by the network device, or sent non-periodically by the network device. The period value is predefined by the communication protocol, determined by the network device, or determined by the terminal device.

In some embodiments, the network device sends a configuration to the terminal device, and the configuration includes at least one of:
a first configuration indicating that the terminal device is allowed to send the first scheduling request;
a second configuration used to configure a common scheduling request resource; or
a third configuration used to configure a dedicated scheduling request resource, the dedicated scheduling request resource being dedicated to transmission of the first scheduling request.

In step 930, a first scheduling request sent by the terminal device is received.

In some embodiments, the first scheduling request is sent based on the second configuration. The second configuration is used to configure a common scheduling request resource, i.e., generic scheduling request sending resource.

In some embodiments, the network device also sends the second configuration to the terminal device.

In some embodiments, the second configuration is sent periodically, semi-periodically, or non-periodically by the network device. The period value is predefined by the communication protocol, determined by the network device, or determined by the terminal device.

In some embodiments, the first scheduling request is sent based on the third configuration. The third configuration is used to configure a dedicated scheduling request resource, i.e., a sending resource dedicated to the first scheduling request.

In some embodiments, the network device also sends the third configuration to the terminal device.

In some embodiments, the third configuration is sent periodically, semi-periodically, or non-periodically by the network device. The period value is predefined by the communication protocol, determined by the network device, or determined by the terminal device.

In step 950, a second uplink resource is configured for the terminal device.

In some embodiments, the second uplink resource refers to an uplink resource configured by the network device upon request from the terminal device for sending the first MAC CE, and the data volume corresponding to the first MAC CE is less than or equal to the data volume corresponding to the second uplink resource.

In step 970, a first MAC CE sent by the terminal device is received.

The first MAC CE carries the GNSS validity duration. The GNSS validity duration refers to the validity time of a GNSS position fix.

In some embodiments, the first MAC CE is carried in the MAC PDU. The MAC PDU only includes a MAC CE carrying the GNSS validity duration, and the MAC CE included in the MAC PDU is the first MAC CE.

The GNSS validity duration includes at least one of: a remaining GNSS validity duration, a total GNSS validity duration, and a GNSS expiration duration. A start moment of the remaining GNSS validity duration is a moment of sending the first MAC CE. A start moment of the total GNSS validity duration is a moment of the terminal device obtaining the GNSS position fix. The GNSS expiration duration refers to the time for which the GNSS position fix is invalid, a time start moment of the GNSS expiration duration is the moment of terminal device obtaining the GNSS position fix, and an end moment of GNSS expiration duration is the moment of sending first MAC CE.

In some embodiments, the first MAC CE is sent through the first uplink resource or through the second uplink resource. The first uplink resource refers to an uplink resource that is idle or unoccupied, and capable of accommodating the first MAC CE and its corresponding MAC sub header among the uplink resources already allocated to the terminal device.

In general, in the method provided by the present embodiment, the network device configures an uplink resource to the terminal device for sending the first scheduling request and/or the first MAC CE, and receives the first MAC CE carrying the GNSS validity duration, such that the terminal device and the network device may share accurate the GNSS validity duration in a timely manner, preventing the problem of accurate GNSS validity duration not being shared in a timely manner between the terminal device and the network device due to the resource shortage.

FIG. 10 illustrates a flowchart of a method for transmitting a GNSS validity duration provided by some illustrative embodiments of the present application. For example, the method is performed by a network device and a terminal device, and the method includes at least some of the following steps.

In step 1010: the network device sends a first configuration to the terminal device.

The first configuration is configured to allow the terminal device to send the first scheduling request. The first scheduling request is used to request the network device to configure the second uplink resource for the terminal device. The second uplink resource is the uplink resource configured by the network device upon request from the terminal device for sending the first MAC CE.

In some embodiments, the first configuration is sent by the network device when establishing a connection with the terminal device, or sent periodically by the network device, or sent semi-periodically by the network device, or sent non-periodically by the network device. The period value is predefined by the communication protocol, determined by the network device, or determined by the terminal device.

In step 1020, the terminal device generates a first MAC CE.

In a case where at least one MAC CE carrying the GNSS validity duration is triggered, the terminal device generates at least one MAC CE carrying the GNSS validity duration through the multiplexing and assembly process. The multiplexing involves multiplexing a plurality of logical channels and MAC CEs onto a single MAC PDU, and the assembly involves loading MAC CEs and logical channel data according to the priority.

The terminal device generates a MAC PDU based on the logical channel prioritization result. This MAC PDU only includes a MAC CE carrying the GNSS validity duration. The MAC CE included in the MAC PDU is the first MAC CE.

The first MAC CE is any one of the at least one MAC CE carrying the GNSS validity duration, or one selected according to a specific rule (such as priority rule).

The GNSS validity duration includes at least one of: a remaining GNSS validity duration, a total GNSS validity duration, and a GNSS expiration duration. A start moment of the remaining GNSS validity duration is a moment of sending the first MAC CE. A start moment of the total GNSS validity duration is a moment of the terminal device obtaining the GNSS position fix. The GNSS expiration duration refers to the time for which the GNSS position fix is invalid, a time start moment of the GNSS expiration duration is the moment of terminal device obtaining the GNSS position fix, and an end moment of GNSS expiration duration is the moment of sending first MAC CE.

In step 1030, the terminal device sends a first scheduling request.

The first scheduling request is sent by the terminal device to the network device. The first scheduling request is used to request the network device to configure the second uplink resource for the terminal device. The second uplink resource is the uplink resource configured by the network device upon request from the terminal device for sending the first MAC CE.

In a case where no first uplink resource is present, the terminal device sends a first scheduling request to the network device.

In some embodiments, the terminal device determines whether the first uplink resource is present based on the logical channel prioritization result. In a case where the logical channel prioritization result indicates that no first uplink resource is present, the terminal device sends the first scheduling request, and the first scheduling request is used to request the network device to configure the second uplink resource.

The first uplink resource refers to an idle, unoccupied, or unused uplink resource among the uplink resources already allocated to the terminal device, and a data volume corresponding to the first MAC CE is less than or equal to a data volume corresponding to the first uplink resource.

In some embodiments, the data volume corresponding to the first MAC CE is less than or equal to the data volume corresponding to the first uplink resource. This may be understood to mean that the first uplink resource may accommodate the first MAC CE, or the first uplink resource may accommodate the first MAC CE and its corresponding MAC sub header. This may also be understood to mean that the data volume corresponding to the first MAC CE is less than or equal to the data volume or the maximum data volume that the first uplink resource can carry.

The second uplink resource refers to an uplink resource configured by the network device upon request from the terminal device for sending the first MAC CE, and the data volume corresponding to the first MAC CE is less than or equal to the data volume corresponding to the second uplink resource.

In some embodiments, the data volume corresponding to the first MAC CE is less than or equal to the data volume corresponding to the second uplink resource. This may be understood to mean that the second uplink resource may accommodate the first MAC CE, or the second uplink resource may accommodate the first MAC CE and its corresponding MAC sub header. This may also be understood to mean that the data volume corresponding to the first MAC CE is less than or equal to the data volume or the maximum data volume that the second uplink resource can carry.

In some embodiments, before sending the first scheduling request, the terminal device also receives a first configuration sent by the network device, and the first configuration is used to allow the terminal device to send the first scheduling request.

In some embodiments, the first configuration is sent by the network device when establishing a connection with the terminal device, or sent periodically by the network device, or sent semi-periodically by the network device, or sent non-periodically by the network device. The period value is predefined by the communication protocol, determined by the network device, or determined by the terminal device.

In some embodiments, the terminal device sends the first scheduling request based on a second configuration. The second configuration is used to configure a common scheduling request resource, i.e., generic scheduling request sending resource.

In some embodiments, before sending the first scheduling request, the terminal device also receives the second configuration sent by the network device.

In some embodiments, the second configuration is sent periodically, semi-periodically, or non-periodically by the network device. The period value is predefined by the communication protocol, determined by the network device, or determined by the terminal device.

In some embodiments, the terminal device sends the first scheduling request based on a third configuration. The third configuration is used to configure a dedicated scheduling request resource, and the dedicated scheduling request resource is an uplink resource dedicated to sending the first scheduling request.

In some embodiments, before sending the first scheduling request, the terminal device also receive the third configuration sent by the network device.

In some embodiments, the third configuration is sent periodically, semi-periodically, or non-periodically by the network device. The period value is predefined by the communication protocol, determined by the network device, or determined by the terminal device.

In some embodiments, if the dedicated scheduling request resource is already configured for the terminal device, the terminal device uses the dedicated scheduling request resource to send the first scheduling request. In other words, in a case where the terminal device already receives the third configuration sent by the network device, the terminal device sends the first scheduling request based on the third configuration.

Otherwise, the terminal device uses the common scheduling request resource to send the first scheduling request. That is, if no dedicated scheduling request resource is configured for the terminal device, the terminal device uses the common scheduling request resource to send the first scheduling request. It may also be understood as, in a case where the terminal device does not receive the third configuration sent by the network device, the terminal device sends the first scheduling request based on the second configuration.

In step 1040, the network device configures a second uplink resource for the terminal device.

In some embodiments, the second uplink resource refers to an uplink resource configured by the network device upon request from the terminal device for sending the first MAC CE, and may accommodate the first MAC CE and its corresponding MAC sub header.

In step 1050, the terminal device sends a first MAC CE.

In a case where at least one MAC CE carrying the GNSS validity duration is triggered, the terminal device sends the MAC PDU, the MAC PDU carrying the first MAC CE.

The first MAC CE is sent from the terminal device to the network device, and the network device includes an access network device and/or a satellite.

In a case where a first uplink resource is present, the first MAC CE is sent on the first uplink resource. The first uplink resource refers to an uplink resource that is idle or unoccupied, and capable of accommodating the first MAC CE and its corresponding MAC sub header among the uplink resources already allocated to the terminal device. The terminal device directly uses the first uplink resource to send the MAC PDU carrying the first MAC CE.

In some embodiments, the terminal device determines whether the first uplink resource is present based on the logical channel prioritization result. In a case where the logical channel prioritization result indicates that the first uplink resource is present, the terminal device sends the first MAC CE on the first uplink resource.

In a case where no first uplink resource is present, the terminal device sends the first MAC CE on the second uplink resource. Alternatively, in a case where the configuration of the second uplink resource is received, the terminal device sends the first MAC CE on the second uplink resource.

In some embodiments, the terminal device determines whether the first uplink resource is present based on the logical channel prioritization result. In a case where the logical channel prioritization result indicates that no first uplink resource is present, the terminal device sends the first MAC CE on the second uplink resource.

In step 1060: a second MAC CE is canceled.

The second MAC CE is a MAC CE other than the first MAC CE among the at least one MAC CE carrying the GNSS validity duration.

In some embodiments, when the first MAC CE is carried in the MAC PDU for transmission, the terminal device cancels all triggered second MAC CEs; or when the first MAC CE is carried in the MAC PDU and is ready for transmission, the terminal device cancels all triggered second MAC CEs; or when the first MAC CE is carried in the MAC PDU and is about to be transmitted, the terminal device cancels all triggered second MAC CEs; or when the first MAC CE is carried in the MAC PDU and is being transmitted, the terminal device cancels all triggered second MAC CEs.

In some embodiments, when the first MAC CE is carried in the MAC PDU for transmission, the terminal device cancels all triggered MAC CEs (including the first MAC CE and the second MAC CE); or when the first MAC CE is carried in the MAC PDU and is ready for transmission, the terminal device cancels all triggered MAC CEs; or when the first MAC CE is carried in the MAC PDU and is about to be transmitted, the terminal device cancels all triggered MAC CEs; or when the first MAC CE is carried in the MAC PDU and is being transmitted, the terminal device cancels all triggered MAC CEs.

In some embodiments, the triggering of the MAC CE is canceled, which may be understood as the terminal device being in a state where it does not need to send the MAC CE carrying the GNSS validity duration, or the terminal device being in a state where it is not ready to send the MAC CE carrying the GNSS validity duration, or the terminal device being in a state where it is not about to send the MAC CE carrying the GNSS validity duration.

In general, in the method provided by the present embodiment, the network device configures an uplink resource to the terminal device for sending the first MAC CE carrying the GNSS validity duration, and the terminal device determines whether to use the first uplink resource or the second uplink resource to send the first MAC CE, such that the terminal device and the network device may share accurate the GNSS validity duration in a timely manner, preventing the problem of accurate GNSS validity duration not being shared in a timely manner between the terminal device and the network device due to the resource shortage.

It should be understood that the order of the above steps may be adjusted in actual application, which is not limited by the present application. For example, the network device first sends the first configuration to the terminal device, then sends the second configuration and/or third configuration to the terminal device; or the network device first sends the first configuration to the terminal device, then sends the second configuration to the terminal device, and then sends the third configuration to the terminal device; or the network device simultaneously sends the first configuration and the second configuration to the terminal device; or the network device simultaneously sends the first configuration and the third configuration to the terminal device.

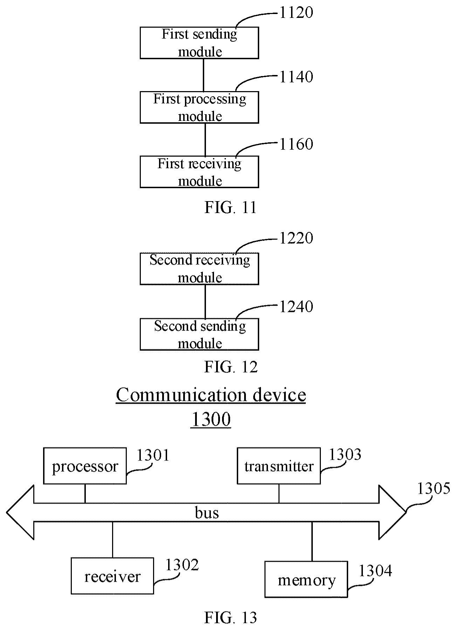

FIG. 11 illustrates a block diagram of an apparatus for transmitting a GNSS validity duration provided by some illustrative embodiments of the present application. The apparatus includes at least part of a first sending module 1120, a first processing module 1140, and a first receiving module 1160.

The first sending module 1120 is configured to send a first MAC CE, in which the first MAC CE carries the GNSS validity duration.

In some embodiments, the first sending module 1120 is further configured to, in a case where a first uplink resource is present, send the first MAC CE on the first uplink resource.

The first uplink resource refers to an uplink resource that is idle and capable of accommodating the first MAC CE.

In some embodiments, the first sending module 1120 is further configured to, in a case where a first uplink resource is present, send a first scheduling request.

The first scheduling request is used to request the network device to schedule the second uplink resource, the second uplink resource is used to send the first MAC CE, and the first uplink resource refers to an uplink resource that is an idle and capable of accommodating the first MAC CE.

In some embodiments, the apparatus further includes:
a first receiving module 1160, configured to receive a first configuration sent by the network device, and the first configuration is used to allow the apparatus to send the first scheduling request.

In some embodiments, the first sending module 1120 is further configured to send the first scheduling request based on a second configuration, and the second configuration is used to configure a common scheduling request resource.

In some embodiments, the first receiving module 1160 is configured to receive the second configuration sent by the network device.

In some embodiments, the first sending module 1120 is further configured to send the first scheduling request based on a third configuration, the third configuration is used to configure a dedicated scheduling request resource, and the dedicated scheduling request resource is dedicated to transmission of the first scheduling request.

In some embodiments, the first receiving module 1160 is configured to receive the third configuration sent by the network device.

In some embodiments, the first sending module 1120 is further configured to, in a case where at least one MAC CE carrying the GNSS validity duration is triggered, send a MAC protocol data unit (PDU), the MAC PDU carrying the first MAC CE.

The first MAC CE is one of the at least one MAC CE carrying the GNSS validity duration.

In some embodiments, the apparatus further includes:
a first processing module 1140, configured to cancel a second MAC CE, in which the second MAC CE is a MAC CE other than the first MAC CE among the at least one MAC CE carrying the GNSS validity duration.

In some embodiments, the GNSS validity duration includes the remaining GNSS validity duration and/or the total GNSS validity duration.

In some embodiments, a start moment of the remaining GNSS validity duration is a moment of sending the first MAC CE; and
a start moment of the total GNSS validity duration is a moment of obtaining a GNSS position fix.

In general, in the apparatus provided by the present embodiment, the GNSS validity duration is sent by being carried in the first MAC CE, such that the apparatus and the network device may share accurate GNSS validity duration in a timely manner; furthermore, in a case where the first uplink resource is present or no first uplink resource is present, how to send the first MAC CE is considered, preventing the problem of being unable to send the GNSS validity duration due to resource shortage.

FIG. 12 illustrates a block diagram of an apparatus for transmitting a GNSS validity duration provided by some illustrative embodiments of the present application. The apparatus includes at least part of a second receiving module 1220, and a second sending module 1240.

The second receiving module 1220 is configured to receive a first MAC CE, in which the first MAC CE carries the GNSS validity duration.

In some embodiments, the first MAC CE is sent by the terminal device on the first uplink resource.

The first uplink resource refers to an uplink resource that is idle and capable of accommodating the first MAC CE.

In some embodiments, the second receiving module 1220 is further configured to receive a first scheduling request sent by the terminal device.

The first scheduling request is used to request the apparatus to schedule the second uplink resource, the second uplink resource is used to send the first MAC CE, and the first uplink resource refers to an uplink resource that is an idle and capable of accommodating the first MAC CE.

In some embodiments, the apparatus further includes:
a second sending module 1240, configured to send a first configuration, in which the first configuration is used to allow the terminal device to send the first scheduling request.

In some embodiments, the second sending module 1240 is configured to send a second configuration, and the second configuration is used to configure a common scheduling request resource.

In some embodiments, the second sending module 1240 is configured to send a third configuration, the third configuration is used to configure a dedicated scheduling request resource, and the dedicated scheduling request resource is dedicated to transmission of the first scheduling request.

In some embodiments, the second receiving module 1220 is further configured to receive a MAC PDU, in which the MAC PDU carries the first MAC CE.

The first MAC CE is one of the at least one MAC CE carrying the GNSS validity duration.

In some embodiments, the GNSS validity duration includes the remaining GNSS validity duration and/or the total GNSS validity duration.

In some embodiments, a start moment of the remaining GNSS validity duration is a moment of sending the first MAC CE; and
a start moment of the total GNSS validity duration is a moment of obtaining a GNSS position fix.

In general, the apparatus provided by the present embodiment supports to configure an uplink resource to the terminal device for sending the first scheduling request and/or the first MAC CE, and receives the first MAC CE carrying the GNSS validity duration, such that the terminal device and the apparatus may share accurate the GNSS validity duration in a timely manner, preventing the problem of accurate GNSS validity duration not being shared in a timely manner between the terminal device and the apparatus due to the resource shortage.

It should be noted that the apparatus provided by the embodiments described above is only an example based on the division of the functional modules described above. In actual application, the functions described above may be assigned to different functional modules according to needs. That is, the internal structure of the apparatus may be divided into different functional modules, to perform all or part of the functions described above.

With regard to the apparatus in the present embodiment, the specific manner in which each module performs an operation is described in detail in the embodiments relating to the method, and will not be described in detail herein.

FIG. 13 illustrates a block diagram of a communication device (a terminal device or a network device) provided by some illustrative embodiments of the present application. The communication device 1300 includes a processor 1301, a receiver 1302, a transmitter 1303, a memory 1304, and a bus 1305.

The processor 1301 includes one or more processing cores. The processor 1301 executes various functional applications and information processing by running software programs and modules. In some embodiments, the processor 1301 may be used to implement the functions and steps of the first processing module 1140 described above.

The receiver 1302 and the transmitter 1303 may be implemented as a communication component, and the communication component may be a communication chip. In some embodiments, the receiver 1302 may be used to implement the functions and steps of the first receiving module 1160 and/or the second receiving module 1220 described above. In some embodiments, the transmitter 1303 may be used to implement the functions and steps of the first sending module 1120 and/or the second sending module 1240 described above.

The memory 1304 is connected to the processor 1301 through the bus 1305. The memory 1304 may be used to store at least one instruction, and the processor 1301 is used to execute the at least one instruction, to implement the various steps in the method embodiments described above.

Additionally, the memory 1304 may be implemented using any type of volatile or non-volatile storage device or a combination thereof. The volatile or non-volatile storage devices include, but are not limited to: disks or optical discs, electrically erasable programmable read only memory (EEPROM), erasable programmable read-only memory (EPROM), static random-access memory (SRAM), read-only memory (ROM), magnetic storage, flash memory, and programmable read-only memory (PROM).

In some embodiments, the receiver 1302 independently receives signals/data, or the processor 1301 controls the receiver 1302 to receive signals/data, or the processor 1301 requests the receiver 1302 to receive signals/data, or the processor 1301 cooperates with the receiver 1302 to receive signals/data.

In some embodiments, the transmitter 1303 independently sends signals/data, or the processor 1301 controls the transmitter 1303 to send signals/data, or the processor 1301 requests the transmitter 1303 to receive signals/data, or the processor 1301 cooperates with the transmitter 1303 to send signals/data.

In an illustrative embodiment of the present application, there is further provided a computer-readable storage medium storing at least one segment of program, in which a processor loads and executes the at least one segment of program, to cause the computer-readable storage medium to implement the method for sending the GNSS validity duration or the method for receiving the GNSS validity duration according to individual method embodiments described above.

In an illustrative embodiment of the present application, there is further provided a chip including a programmable logic circuit and/or program instructions, in which the chip runs on the communication device to implement the method for sending the GNSS validity duration or the method for receiving the GNSS validity duration according to individual method embodiments described above.

In an illustrative embodiment of the present application, there is further provided a computer program product, in which a processor of a computer device executes the computer program product, to cause the computer device to perform the method for sending the GNSS validity duration or the method for receiving the GNSS validity duration described above.

In an illustrative embodiment of the present application, there is further provided a computer program including computer instructions, in which a processor of a computer device executes the computer instructions, to cause the computer device to perform the method for sending the GNSS validity duration or the method for receiving the GNSS validity duration described above.

Those skilled in the art will appreciate that, in one or more of the above examples, the functions described in the embodiments of the present application may be implemented using hardware, software, firmware, or any combination thereof. When implemented using software, these functions may be stored in a computer-readable medium or transmitted as one or more instructions or codes on a computer-readable medium. The computer-readable medium includes a computer storage medium and a communication medium, and the communication medium includes any medium that facilitates the transmission of computer programs from one location to another. The storage medium may be any available medium that may be accessed by general-purpose or special-purpose computers.

Those described above are only optional embodiments of the present application and are not intended to limit the present disclosure. Any modifications, equivalent substitutions, improvements, and the like within the spirit and principle of the present disclosure should be included in the protection scope of the present disclosure.

## Claims

1. A method for transmitting a global navigation satellite system (GNSS) validity duration, performed by a terminal device, comprising:
sending a first media access control (MAC) control element (CE), wherein the first MAC CE carries the GNSS validity duration.

2. The method according to claim 1, wherein sending the first MAC CE comprises:
in a case where a first uplink resource is present, sending the first MAC CE on the first uplink resource,
wherein the first uplink resource is an unused uplink resource already allocated to the terminal device, and a data volume corresponding to the first MAC CE is less than or equal to a data volume corresponding to the first uplink resource.

3. The method according to claim 1, wherein sending the first MAC CE comprises:
in a case where no first uplink resource is present, sending a first scheduling request,
wherein the first scheduling request is used to request a network device to configure a second uplink resource, and the second uplink resource is used for the terminal device to send the first MAC CE; and the first uplink resource is an unused uplink resource already allocated to the terminal device, and a data volume corresponding to the first MAC CE is less than or equal to a data volume corresponding to the first uplink resource.

4. The method according to claim 3, wherein before sending the first scheduling request, the method further comprises:
receiving a configuration sent by the network device, wherein the configuration comprises at least one of:
a first configuration indicating that the terminal device is allowed to send the first scheduling request;
a second configuration used to configure a common scheduling request resource; or
a third configuration used to configure a dedicated scheduling request resource, the dedicated scheduling request resource being dedicated to transmission of the first scheduling request.

5. The method according to claim 4, wherein the first scheduling request is sent based on the second configuration of the network device.

6. The method according to claim 4, wherein the first scheduling request is sent based on the third configuration of the network device.

7. The method according to any one of claims 1 to 6, wherein sending the first MAC CE comprises:
in a case where at least one MAC CE carrying the GNSS validity duration is triggered, sending a MAC protocol data unit (PDU), the MAC PDU carrying the first MAC CE,
wherein the first MAC CE is one of the at least one MAC CE carrying the GNSS validity duration.

8. The method according to claim 7, further comprising:
canceling a second MAC CE; or
canceling the first MAC CE and the second MAC CE,
wherein the second MAC CE is a MAC CE other than the first MAC CE among the at least one MAC CE carrying the GNSS validity duration.

9. The method according to any one of claims 1 to 8, wherein the GNSS validity duration comprises at least one of:
a remaining GNSS validity duration;
a total GNSS validity duration; or
a GNSS expiration duration.

10. The method according to claim 9, wherein:
a start moment of the remaining GNSS validity duration is a moment of sending the first MAC CE;
a start moment of the total GNSS validity duration is a moment of obtaining a GNSS position fix; or
a start moment of the GNSS expiration duration is the moment of obtaining the GNSS position fix, and an end moment of the GNSS expiration duration is the moment of sending the first MAC CE.

11. A method for transmitting a global navigation satellite system (GNSS) validity duration, performed by a network device, comprising:
receiving a first media access control (MAC) control element (CE), wherein the first MAC CE carries the GNSS validity duration.

12. The method according to claim 11, wherein:
the first MAC CE is sent by a terminal device on a first uplink resource,
wherein the first uplink resource is an unused uplink resource already allocated to the terminal device, and a data volume corresponding to the first MAC CE is less than or equal to a data volume corresponding to the first uplink resource.

13. The method according to claim 11, wherein before receiving the first MAC CE, the method further comprises:
receiving a first scheduling request sent by a terminal device,
wherein the first scheduling request is used to request the network device to configure a second uplink resource, and the second uplink resource is used for the terminal device to send the first MAC CE; and the first uplink resource is an unused uplink resource already allocated to the terminal device, and a data volume corresponding to the first MAC CE is less than or equal to a data volume corresponding to the first uplink resource.

14. The method according to claim 13, wherein before receiving the first scheduling request sent by the terminal device, the method further comprises:
sending a configuration to the terminal device, wherein the configuration comprises at least one of:
a first configuration indicating that the terminal device is allowed to send the first scheduling request;
a second configuration used to configure a common scheduling request resource; or
a third configuration used to configure a dedicated scheduling request resource, the dedicated scheduling request resource being dedicated to transmission of the first scheduling request.

15. The method according to any one of claims 11 to 14, wherein receiving the first MAC CE comprises:
receiving a MAC protocol data unit (PDU), the MAC PDU carrying the first MAC CE,
wherein the first MAC CE is one of at least one MAC CE carrying the GNSS validity duration.

16. The method according to any one of claims 11 to 15, wherein the GNSS validity duration comprises at least one of:
a remaining GNSS validity duration;
a total GNSS validity duration; or
an GNSS expiration duration.

17. The method according to claim 16, wherein:
a start moment of the remaining GNSS validity duration is a moment of sending the first MAC CE;
a start moment of the total GNSS validity duration is a moment of obtaining a GNSS position fix; or
a start moment of the GNSS expiration duration is the moment of obtaining the GNSS position fix, and an end moment of the GNSS expiration duration is the moment of sending the first MAC CE.

18. An apparatus for transmitting a GNSS validity duration, comprising:
a first sending module, configured to send a first media access control (MAC) control element (CE), wherein the first MAC CE carries the GNSS validity duration.

19. An apparatus for transmitting a GNSS validity duration, comprising:
a second receiving module, configured to receive a first media access control (MAC) control element (CE), wherein the first MAC CE carries the GNSS validity duration.

20. A terminal device, comprising:
a processor;
a transceiver connected to the processor; and
a memory storing executable instructions of the processor,
wherein the processor is configured to load and execute the executable instructions to implement the method for transmitting the GNSS validity duration according to any one of claims 1 to 10.

21. A network device, comprising:
a processor;
a transceiver connected to the processor; and
a memory storing executable instructions of the processor,
wherein the processor is configured to load and execute the executable instructions to implement the method for transmitting the GNSS validity duration according to any one of claims 11 to 17.

22. A computer-readable storage medium storing executable instructions, wherein a processor loads and executes the executable instructions to implement the method for transmitting the GNSS validity duration according to any one of claims 1 to 10 or according to any one of claims 11 to 17.

23. A chip, comprising a programmable logic circuit or program, wherein the chip is configured to implement the method for transmitting the GNSS validity duration according to any one of claims 1 to 10 or according to any one of claims 11 to 17.

24. A computer program product comprising computer instructions stored on a computer-readable storage medium, wherein a processor of a computer device reads the computer instructions from the computer-readable storage medium and executes the computer instructions, to cause the computer device to perform the method for transmitting the GNSS validity duration according to any one of claims 1 to 10 or according to any one of claims 11 to 17.

25. A computer program comprising computer instructions, wherein a processor of a computer device executes the computer instructions, to cause the computer device to perform the method for transmitting the GNSS validity duration according to any one of claims 1 to 10 or according to any one of claims 11 to 17.
